# EUROPEAN PATENT APPLICATION

(11) **EP 1 541 334 A1**
(43) Date of publication of application: **15.06.2005**
(21) Application number: 03078866.5
(22) Date of filing: 09.12.2003
(51) Int. Cl.: B32B 27/00

(54) **High-barrier retort laminates**

(71) Applicant: Amcor Flexibles Europe A/S, 8700 Horsens (DK)
(72) Inventor: Utz, Helmar, Dr., 3425 Koppigen (CH); Nagorski, Herbert, Dr., 47906 Kempen (DE)
(74) Representative: Van Malderen, Michel

(57) **Abstract**

The present invention relates to retortable gas-barrier multilayer film laminates comprising:
a) a first multilayer structure comprising a printable carrier layer and a ceramic gas-barrier layer,
b) a second coextruded multilayer structure comprising at least one seal layer, at least one organic gas-barrier layer and at least one adhesive layer,
characterised in that said first multilayer is laminated on said second multilayer and in that said organic gas-barrier layer is situated in between said seal layer and said adhesive layer in order to achieve a synergy in the gas-barrier properties of said organic and said ceramic gas-barrier layer.

## Description

### Field of the invention

The present invention relates to coextruded retortable multilayer packaging films, and in particular to packaging laminates with oxygen and water vapour barrier properties for food, pharmaceutical or medical applications.

### State of the art

It is well known in the art that food and beverages are packed within packaging structures made of laminated multilayer films or sheets. There is a growing demand on gas-barrier multilayer laminates for food packaging, and in particular for ready meals. Therefore, ready meals are typically packed in rigid, semi-rigid or flexible packagings such as stand-up pouches, the rigidity of the film depending on its thickness and composition.

A major challenge is the shelf life and the stability of the packed products at room temperature conditions. A shelf life of 12 months or more is often required. To this end, laminates with high gas and water vapour barriers have to be used in order to avoid oxidation and loss of humidity.

Typically, very effective gas-barrier multilayer laminates comprise aluminium. Unfortunately, aluminium has a negative influence on the transparency of the multilayer and causes problems for heating the packed product in a microwave oven without using ovenware. Furthermore, the presence of a metal layer is undesirable in terms of recycling possibilities and metal detection within the packaging process.

For the purpose of conservation, the filled packs are typically heat-treated in an autoclave at temperatures above 121°C. Therefore, the laminates have to be designed so as to withstand this process without loosing the required barrier and/or mechanical properties.

While EVOH is very effective as barrier polymer in "thick" multilayer laminates for retortable rigid containers like trays or bottles, it is much less effective in "thin" flexible structures.

Typical examples of multilayer laminates for trays are PP/tie/EVOH/tie/PP with a thickness of 180/10/30/10/180µ. The typical thickness is higher than 300µ. Examples of flexible structures are laminates from typically 40 to 200µ such as the aluminium-free retort structure PETP-AlOx 12µ/OPA 15µ/PP 80µ.

In a flexible laminate, the EVOH layer has a typical thickness of only 10µ or even less and said laminate looses its gas-barrier properties because of the high humidity uptake of the EVOH layer during the retort process. It takes several hours or even longer to recover the barrier because the EVOH layer has to "dry out" at room temperature. During that time, the product is not sufficiently protected, in particular against oxygen, and the shelf life is hence reduced.

Typical aluminium-free high-barrier laminates for retort applications are produced by combining in an adhesive lamination process three basic mono or multilayer films like a ceramic-coated polyester film (e.g. AlOx or SiOx coated bi-axially oriented polyester) with a bi-axially oriented polyamide and a polypropylene film as sealing layer. Such combinations are notably disclosed in documents WO 02/34510 A1, US 6,599,639 B2, US 5,547,765 and US 5,055,355.

Those laminates are very expensive because AlOx or SiOx coated polyester films based on a standard PET like Mylar® 800 do not withstand the retort process. The thin ceramic layers crack and the barrier properties are lost. Expensive co-extruded substrates, for instance a coextrudate of polyethylene terephtalate with a polyethylene naphthalate skin layer as described in document EP 1 008 442, where the vacuum barrier coating is on the PEN side, allow good post-retort barrier properties. Another possibility is to use additional barrier coatings directly on top of the ceramic coating as described in document JP2000202940.

Combinations of ceramic-coated polyester layer directly covered by a crosslinked PVOH/EVOH layer are known by those skilled in the art. In this case, the EVOH layer is used to "stabilise" the ceramic layer in order to avoid damaging this layer in the retort process.

High demand on convenience resulted in developments allowing the easy opening of the packs, e.g. stand-up pouches. This is for instance achieved by pre-opening means, such as perforations on one of the multilayers of the laminate, by means of a laser as described in patent EP 0 398 447, by mechanically damaging the surface, for example with sand paper, by particular treated rolls or even by cutting with knives. The weakening of the laminate allows easy tear behaviour. The disadvantage is that by damaging one of the multilayer components of the laminate, the barrier properties of the laminate with a single barrier layer are typically lowered.

Unfortunately, lower-cost laminates as bi-axially oriented polyester adhesive laminated to a coextruded polypropylene/tie/EVOH/tie/polypropylene with the EVOH as sole gas barrier do not allow the typically required shelf life of more than 12 months.

### Aims of the invention

The present invention aims to provide a new cost-effective high-barrier retort laminate for food packaging providing a shelf life of more than 12 months. Furthermore, the present invention aims to provide a production process for said high-barrier retort laminate as well as the use of said laminate for food, pharmaceutical or medical applications.

### Summary of the invention

The present invention discloses a retortable gas-barrier multilayer film laminate comprising:
a) a first multilayer structure comprising a printable carrier layer and a ceramic gas-barrier layer,
b) a second coextruded multilayer structure comprising at least one seal layer, at least one organic gas-barrier layer and at least one adhesive layer,
characterised in that said first multilayer is laminated on said second multilayer, and in that said organic gas-barrier layer is situated in between said seal layer and said adhesive layer in order to achieve a synergy in the gas-barrier properties of said organic and said ceramic gas-barrier layer.

In a complementary aspect of the present invention, said multilayer film further comprises an intermediate layer, said organic gas-barrier layer being situated in between the intermediate layer and said seal layer.

In a particular embodiment of the present invention, at least one of the layers of said multilayer film comprises an oxygen scavenger.

In a particular aspect of the present invention, said first or second multilayer film further comprises perforations.

According to the invention, the ceramic gas-barrier layer is selected from the group consisting of aluminiumoxide and/or siliconoxide, magnesiumoxid, ceriumoxid, hafniumoxid, tantalumoxid, titaniumoxide, yttriumoxide, zyrconiumoxide and carbon layers or mixtures thereof.

Furthermore, the invention discloses a printable carrier layer selected from the group consisting of polyester, polyamide, polyolefines, polycarbonate, polyphenylene oxide or blends of polyphenylene oxide and polystyrene and their copolymers and/or coextrudates.

Additionally, the invention discloses an organic gas-barrier layer selected from the group consisting of EVOH, PVDC, crosslinked PVOH, high-barrier polyamide and liquid crystal polymers.

In a particular embodiment of the present invention, the oxygen scavenger is selected from the group consisting of unsaturated hydrocarbons, ascorbic acid derivatives, sulfites and phenolics.

According to an additional aspect of the present invention, the seal layer is selected from the group consisting of heat-sealable polyester, polyolefines and their copolymers.

In a particular embodiment of the present invention, the first multilayer structure is an AlOₓ and/or SiOₓ coating of about 5 to 100nm on a PETP layer of about 12µ.

In another particular embodiment of the present invention, the second multilayer structure comprises as organic gas-barrier layer, an EVOH layer of 3 to 20µ situated in between an intermediate layer of polypropylene of 10µ to 100µ and a seal layer of polypropylene of 10 to 150µ.

Furthermore, the second multilayer structure comprises as organic gas-barrier layer, an EVOH layer of 3 to 20µ situated in between a scavenger layer comprising a polypropylene matrix of 10 to 100µ and a seal layer (7) of polypropylene of 10 to 150µ.

The present invention further discloses that the combined thickness of the first multilayer laminated on the second multilayer is lower than 300µ, and preferably lower than 200µ.

A key feature of the present invention is that the oxygen permeability of the global gas-barrier multilayer film, after retort treatment at 121°C for 20 minutes is lower than 2cm³/(m² d bar) at 23°C/75% r.h.

A particular embodiment of the present invention is that the oxygen permeability of the global gas-barrier multilayer film after retort treatment at 121°C for 20 minutes is lower than 0,1cm³/(m² d bar) at 23°C/75% r.h.

In a particular aspect of the present invention, said second multilayer structure is obtainable by a blocked bubble film or swim film process.

A particular embodiment of the present invention discloses that the second multilayer of the following structure PP/tie/EVOH/tie/PP//PP/tie/EVOH/tie/PP is obtainable by a blocked bubble film or swim film process.

In a general aspect, the present invention also includes packagings containing the retortable gas-barrier multilayer and their use for food, pharmaceutical and medical applications.

### Short description of the drawings

Fig.1 represents a PETP-AlOx/adhesive/coexPP/tie/EVOH/tie/PP.

Fig.2 represents a PETP-SiOx/adhesive/coexPP/tie/EVOH/tie/PP.

Fig.3 represents a 4 ply blocked bubble film (swim film) PETP-AlOx/adhesive/coexPP/tie/EVOH/tie//tie/EVOH/tie/PP.

Fig.4 represents a 5 ply blocked bubble film (swim film) with additional PP layers inside the collapsed swim film PETP-AlOx/adhesive/PP/tie/EVOH/tie/PP//PP/tie/EVOH/tie/PP.

Fig.5 represents a PETP-AlOx/adhesive/coexPP with scavenger/tie/EVOH/tie/PP.

### Detailed description of the invention

The problem solved by the present invention is the achievement of a cost-effective gas-barrier multilayer film presenting a required oxygen-permeability level of less than 1cm³/(m² d bar) at 23°C/75% r.h. (DIN 53 380 T 3) without using any metal layer.

It is particularly important that these values are measured after the retort process in order to have a realistic picture of the remaining gas barrier after this treatment. Permeability measurements with various SiOx or AlOx coated polyester films from different suppliers laminated to polypropylene have shown that only expensive special grades (e.g. SiOx coated PET like Techbarrier®T or AlOx-coated PET like Toppan®GL-AEH) of the coated polyesters allow to achieve the typically required oxygen-permeability level of less than 1cm³/(m² d bar) at 23°C/75% r.h. These films have a special barrier coating directly on top of the ceramic that closes the cracks created during the retort process.

Additionally, a perforated area always constitutes a weak point in barrier films and the addition of a second barrier layer as described in the present invention can compensate the barrier loss in the perforated areas.

Surprisingly, a combination of a standard polyethylene terephtalate (PET) film such as Mylar 800 coated with AlOx, which is usually not retort-stable as the oxide coating cracks, with a coextruded polypropylene/tie/EVOH/tie/ polypropylene film results in a laminate that allows a typical shelf life of more than 12 months. A synergy in the gas-barrier effect is observed insofar as the combination of both multilayer laminates achieves a higher gas barrier than the addition of both gas barriers taken on their own.

The permeability of a laminate PETP-AlOx 12µ/ adhesive 3µ/ PP 30µ/ tie 5µ/ EVOH 10µ/ tie 5µ/ PP 30µ (total thickness 95µ) is lower than 1cm³/(m² d bar) at 23°C/75% r.h. directly post-retort.

The additional barrier given by the AlOx coating is sufficient to compensate for the barrier loss of the thin EVOH (e.g. Soarnol SG 372) layer during and post retort. A similar result is achieved by using a standard polyethylene terephtalate (PET) film such as Hostaphane®RNK coated with SiOx.

In order to further improve the barrier properties, a so-called coextruded blocked bubble film or swim film is disclosed. The principle of such a blocked bubble film ("Blockschlauch") is disclosed in document DE 3216097 A1 and is applied to the present invention through a blown PP/tie/EVOH/tie/PP film, whereby the tube is not separated into two films but collapsed and welded to give the following structure:
PP/tie/EVOH/tie/ PP// PP/tie/ EVOH/tie/PP (5 layer tube) or PP/tie/EVOH/tie// tie/EVOH/tie/PP (4 layer tube). The inner PP or tie layers of the tube (// area) stick together but are not really bonded.

A typical construction is PP 25µ/tie 5µ/EVOH 5µ/tie 5µ/PP 5µ// PP 5µ/tie 5µ/EVOH 5µ/tie 5µ/PP 25µ or PP 30µ/tie 5µ/EVOH 5µ/tie 5µ//tie 5µ/EVOH 5µ/tie 5µ/PP 30µ.

The so-achieved double EVOH barrier allows a significant improvement of the oxygen barrier with the same amount of EVOH (two EVOH layers of 5µ each, instead of one EVOH layer of 10µ).

Another option in order to increase the shelf life is to put oxygen scavengers in one or more of the coextruded layers or into the adhesive. The scavenger consumes the permeating oxygen and therefore gives an additional protection to the packed product. The oxygen scavenger can also be used within a blocked bubble film or swim film ("Blockschlauch") based laminate.

Oxygen scavengers are for example described in documents US 4,536,409 and US 4,702,966. Non-restrictive examples of such scavengers are unsaturated hydrocarbons, ascorbic acid derivatives, sulfites and phenolics, that can be oxidised by molecular oxygen and can thus serve as an oxygen-scavenging material. Other oxygen scavengers such as Shelfplus™ are based on iron, which captures oxygen and transforms it into iron oxide.

### Description of a preferred embodiment of the invention

### Examples of applications

### Example 1

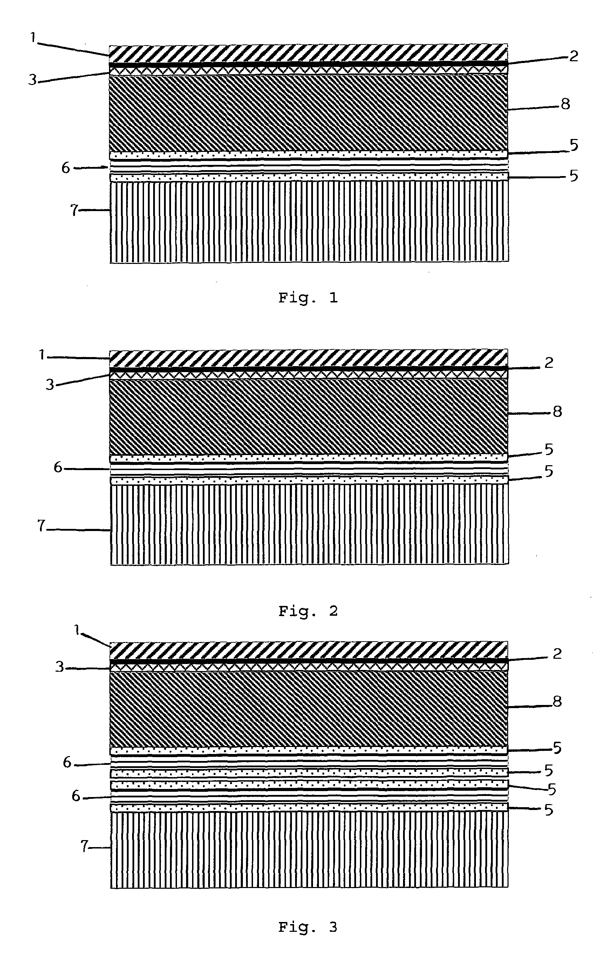

A standard bi-axially oriented polyester film Mylar®800 (12µ) with an AlOx coating, commercially available as Camclear PET, is adhesive laminated to a 100µ-thick coextruded blown film with the structure PP 40µ/tie 5µ/EVOH 10µ/tie 5µ/PP 40µ (see Fig.1). The oxygen permeability of this film is lower than 2cm³/(m² d bar) at 23°C/75% r.h. directly post-retort.

### Example 2

A standard bi-axially oriented polyester film Hostaphan®RNK (12µ) with an SiOx barrier coating of 60nm is adhesive laminated to a 100µ-thick coextruded blown film with the structure PP 40µ/tie 5µ/EVOH 10µ /tie 5µ/PP 40µ (see Fig.2). The oxygen permeability of this film is lower than 2cm³/(m² d bar) at 23°C/75% r.h. directly post-retort.

### Example 3

A standard bi-axially oriented polyester film Mylar®800 (12µ) with an AlOx coating, commercially available as Camclear PET, is adhesive laminated to a 100µ-thick coextruded blocked bubble film of type with the structure PP 35 µ/tie 5µ/EVOH 5µ/tie 5µ//tie 5µ/ EVOH 5µ/tie 5µ/PP 35µ (see Fig. 3). The EVOH layers each have a thickness of 5µ. The oxygen permeability of this film is lower than 1 cm³/(m² d bar) at 23°C/75% r.h. directly post-retort.

### Example 4

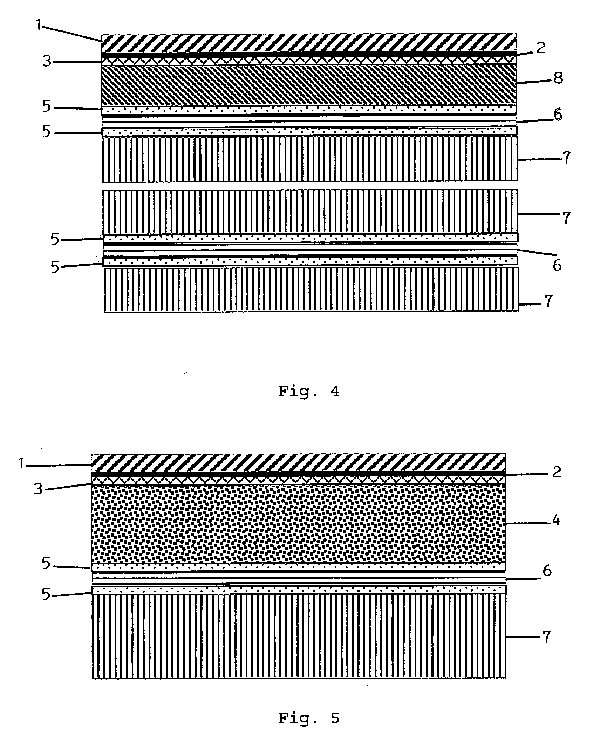

A standard bi-axially oriented polyester film Mylar®800 (12µ) with an AlOx coating, commercially available as Camclear PET, is adhesive laminated to a 100µ-thick coextruded blown film with the structure PP with scavenger 40µ/tie 5µ/EVOH 10µ/tie 5µ/PP 40µ (see Fig.4). The laminated PP side is filled with an oxygen scavenger such as the above-described Shelfplus™. The oxygen permeability of this film is lower than 0.1cm³/(m² d bar) at 23°C/75% r.h. directly post-retort, which means below the detection limit of the measurement equipment, as the scavenger consumes the permeating oxygen.

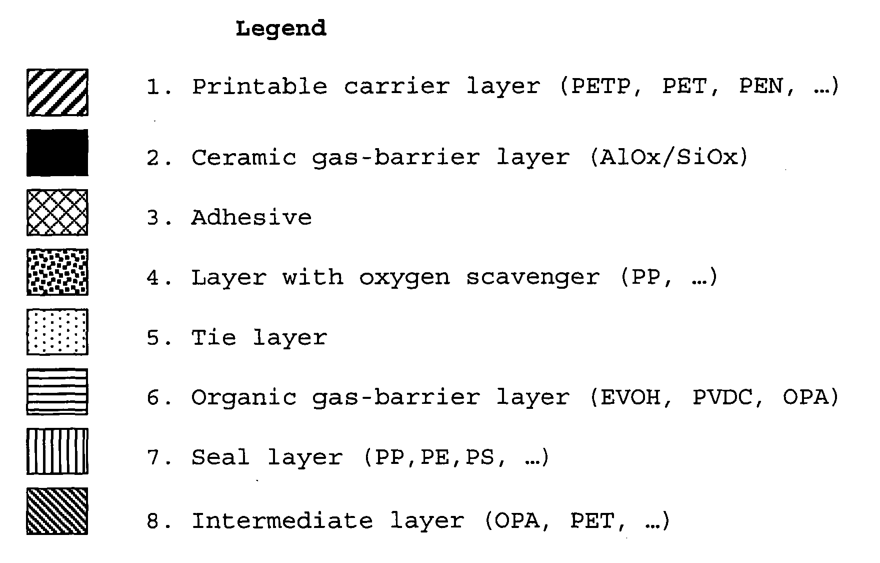

## Claims

1. Retortable gas-barrier multilayer film laminates comprising:
a) a first multilayer structure comprising a printable carrier layer (1) and a ceramic gas-barrier layer (2),
b) a second coextruded multilayer structure comprising at least one seal layer (7), at least one organic gas-barrier layer (6) and at least one adhesive layer (3),
**characterised in that** said first multilayer is laminated on said second multilayer and **in that** said organic gas-barrier layer (6) is situated in between said seal layer (7) and said adhesive layer (3) in order to achieve a synergy in the gas-barrier properties of said organic and said ceramic gas-barrier layer (6, 2).

2. Retortable gas-barrier multilayer film according to Claim 1, **characterised in that** said multilayer film further comprises an intermediate layer (8), said organic gas-barrier layer (6) being situated in between the intermediate layer (8) and said seal layer (7).

3. Retortable gas-barrier multilayer film according to Claim 1, **characterised in that** at least one of the layers of said multilayer film comprises an oxygen scavenger.

4. Retortable gas-barrier multilayer film according to Claim 1, **characterised in that** said first or second multilayer film further comprises perforations.

5. Retortable gas-barrier multilayer film according to Claim 1, **characterised in that** the ceramic gas-barrier layer(2) is selected from the group consisting of aluminiumoxide and/or siliconoxide, magnesiumoxid, ceriumoxid, hafniumoxid, tantalumoxid, titaniumoxide, yttriumoxide, zyrconiumoxide and carbon layers or mixtures thereof.

6. Retortable gas-barrier multilayer film according to Claim 1, **characterised in that** the printable carrier layer (1) is selected from the group consisting of polyester, polyamide, polyolefines, polycarbonate, polyphenylene oxide or blends of polyphenylene oxide and polystyrene and their copolymers and/or coextrudates.

7. Retortable gas-barrier multilayer film according to Claim 1, **characterised in that** the organic gas-barrier layer (6) is selected from the group consisting of EVOH, PVDC, crosslinked PVOH, high-barrier polyamide and liquid crystal polymers.

8. Retortable gas-barrier multilayer film according to any of the previous claims, **characterised in that** the oxygen scavenger is selected from the group consisting of unsaturated hydrocarbons, ascorbic acid derivatives, sulfites and phenolics.

9. Retortable gas-barrier multilayer film according to any of the previous claims, **characterised in that** the seal layer (7) is selected from the group consisting of heat-sealable polyester, polyolefines and their copolymers.

10. Retortable gas-barrier multilayer film according to any of the previous claims, **characterised in that** the first multilayer structure is an AlOₓ and/or SiOₓ coating of about 5 to 100nm on a PETP layer of about 12µ.

11. Retortable gas-barrier multilayer film according to any of the previous claims, **characterised in that** the second multilayer structure comprises as organic gas-barrier layer (6), an EVOH layer of 3 to 20µ situated in between an intermediate layer of polypropylene (8) of 10µ to 100µ and a seal layer (7) of polypropylene of 10 to 150µ.

12. Retortable gas-barrier multilayer film according to any of the previous claims, **characterised in that** the second multilayer structure comprises as organic gas-barrier layer (6), an EVOH layer of 3 to 20µ situated in between a scavenger layer (4) comprising a polypropylene matrix of 10 to 100µ and a seal layer (7) of polypropylene of 10 to 150µ.

13. Retortable gas-barrier multilayer film according to any of the previous claims, **characterised in that** the combined thickness of the first multilayer laminated on the second multilayer is lower than 300µ, and preferably lower than 200µ.

14. Retortable gas-barrier multilayer film according to Claim 9, **characterised in that** the oxygen permeability of the global gas-barrier multilayer film after retort treatment at 121°C for 20 minutes is lower than 2cm³/(m² d bar) at 23°C/75% r.h.

15. Retortable gas-barrier multilayer film according to Claim 9, **characterised in that** the oxygen permeability of the global gas-barrier multilayer film after retort treatment at 121°C for 20 minutes is lower than 0,1 cm³/(m² d bar) at 23°C/75% r.h.

16. Retortable gas-barrier multilayer film according to any of the previous claims, **characterised in that** said second multilayer structure is obtainable by a blocked bubble film or swim film process.

17. Retortable gas-barrier multilayer film according to any of the previous claims, **characterised in that** a second multilayer of the following structure PP/tie/EVOH/tie/ PP// PP/tie/EVOH/tie/PP is obtainable by a blocked bubble film or swim film process.

18. Packagings containing the retortable gas-barrier multilayer of Claim 1.

19. Use of a packaging as in Claim 18 for food, pharmaceutical and medical applications.
